# EUROPEAN PATENT SPECIFICATION

(11) **EP 3 498 502 B1**
(45) Date of publication and mention of the grant of the patent: **14.07.2021**
(21) Application number: 18212048.5
(22) Date of filing: 12.12.2018
(51) Int. Cl.: B60C 23/12, F04B 45/04, F04B 45/047

(54) **PUMP ASSEMBLY AND WHEEL ASSEMBLY**
PUMPENANORDNUNG UND RADMONTAGE
ENSEMBLE DE POMPE ET ENSEMBLE DE ROUE

(30) Priority: 18.12.2017 US 201715845208
(43) Date of publication of application: 19.06.2019
(73) Proprietor: The Goodyear Tire & Rubber Company, Akron, OH 44316 (US)
(72) Inventor: LIN, Cheng-Hsiung, Hudson, Ohio 44236 (US)
(74) Representative: Kutsch, Bernd

(56) References cited:
- JP-A- 2010 095 165
- US-A1- 2014 096 881
- US-B1- 6 533 010
- US-B2- 8 807 182

## Description

### Field of the Invention

The present invention relates to a pump system and method for maintaining appropriate air pressure within a pneumatic tire. More specifically, the present invention relates to a wheel mounted system for directing air into a tire cavity of a pneumatic tire.

### Background of the Invention

Conventional pneumatic tires are designed to perform for relatively long periods of time. In many cases, automobile tires are now expected to have a useful service life of 50,000, 80,000, or 110,000 kilometers. However, even long-life pneumatic tires are subject to air pressure losses due to puncture by nails and other sharp objects, temperature changes, and/or diffusion of air through the tire itself.

Since air diffusion reduces tire pressure over time, the pneumatic tires are often continually underinflated. Accordingly, drivers must repeatedly act to maintain tire pressures or fuel economy, tire life, and/or vehicle braking and handling performance will be reduced. Tire Pressure Monitoring Systems (TPMS) have been proposed to warn drivers when tire pressure is significantly low. Such systems, however, remain dependent upon a driver taking remedial action, when warned, to re-inflate a tire to the recommended pressure. It is desirable, therefore, to incorporate an air maintenance feature within a pneumatic tire that will maintain recommended air pressure without requiring bothersome driver intervention.

While pumping systems have been proposed, many are often too mechanically complex and costly. Consumers are not willing to pay for an expensive pump system. Thus, an improved simple, low cost pump that is easy to install is desired. The pump system must have a low-profile design so that is does not interfere with the mounting of the tire or other mechanical components.

US-B1-6,533,010 describes a pumping mechanism in accordance with the preamble of claim 1.

US-A1-2014/096881 describes a device for maintaining a desired inflation pressure within a tire mounted on a wheel of a vehicle which includes a flexible compression chamber and a magnetic element not on the wheel. A strike plate is actuated by a permanent magnet mounted on a break caliber.

US-B2-8,807,182 describes an automatic tire pressurizing and regulating system maintaining a predetermined pressure in a pneumatic tire during rotation of the tire. The system comprises a fill valve, one or more pumping devices and a belt that provides fluid pathways that allow fluid to flow between the outside atmosphere, the pumping device and the tire.

JP-A-2010-095165 describes a mounting structure of an air pressure detection apparatus.

### Summary of the Invention

The invention relates to a pumping mechanism in accordance with claim 1 and to a wheel assembly in accordance with claim 10.

Dependent claims refer to preferred embodiments of the invention.

A pumping mechanism in accordance with the present invention is configured for use with a pneumatic tire mounted on a wheel to keep the pneumatic tire from becoming underinflated.

According to a first aspect of the invention, a double acting pump mechanism is described for mounting on a wheel for inflating a pneumatic tire. The double acting pump mechanism includes a housing having a first pump chamber and a second pump chamber; wherein a diaphragm separates the first pump chamber from the second pump chamber; said housing further including an inlet port in fluid communication with the first pump chamber, and an outlet port in fluid communication with the second pump chamber, and wherein the outlet of the first pump chamber is in fluid communication with the inlet of the second pump chamber; a strike plate is positioned for reciprocation in the housing; said strike plate being connected to a diaphragm holder, wherein said diaphragm holder engages the diaphragm and actuates the diaphragm in the first and second pump chamber. Preferably, the strike plate is actuated by a permanent or electro magnet mounted on a stationary part, or the strike plate is actuated by an electrically driven magnet.

In a preferred aspect of the invention, the first pump chamber is formed from a curved surface of the interior surface of a frame.

In a preferred aspect of the invention, the pump mechanism operatively utilizes gravitational force changes during rotation of the pneumatic tire as a driving force.

According to another aspect of the invention, a wheel assembly is described comprising a wheel and the pump mechanism mounted on the wheel, preferably inside the wheel rim on the rim flange, for inflating the pneumatic tire.

### Detailed Description of the Drawings

The following drawings are illustrative of examples of the present invention.
FIG. 1 is a perspective view of a wheel and pump system of the present invention;
FIG. 2 is a side view of the wheel of Figure 1 shown with the tire removed;
FIG. 3 is a cross-sectional view of the pump system in the direction 3-3 of Figure 2;
FIG. 4 is a cross-sectional view of the pump system in the direction 4-4 of Figure 2;
FIG. 5 is a close-up view of the pump system of FIG. 4;
FIG. 6 is a schematic view of the pump system with the pumps connected in series;
FIG. 7A is a perspective view of the double acting pump;
FIG. 7B is a top view of the double acting pump;
FIG. 8C is a cross-sectional view in the direction D-D of Fig 7B;

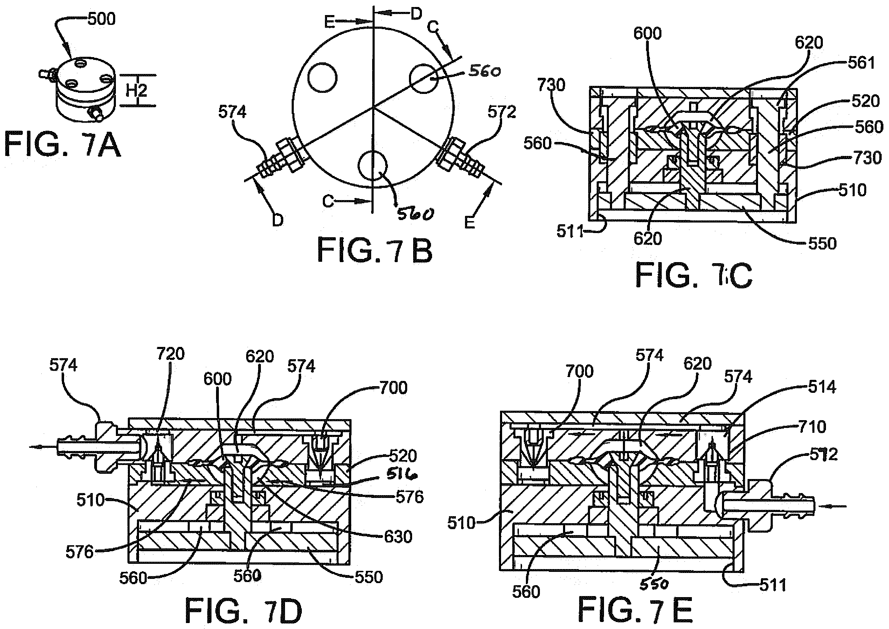

FIG. 7D is a cross-sectional view in the direction C-C of Fig 7B;
FIG. 7E is a cross-sectional view in the direction B-B of Fig 7B;

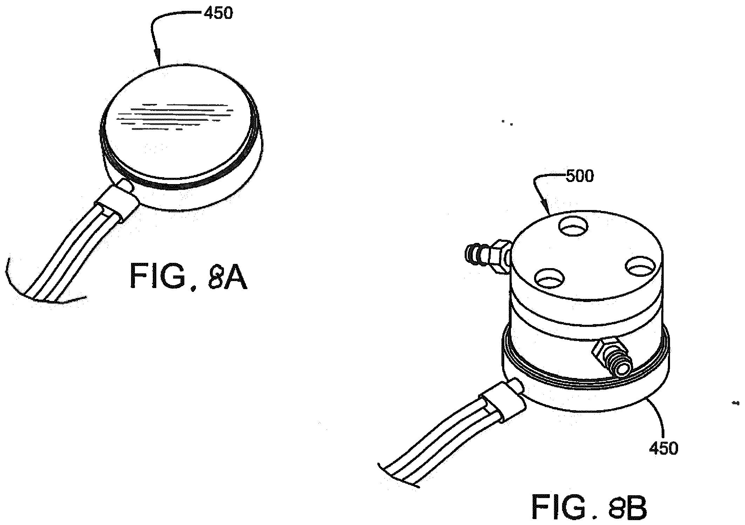

FIG. 8A is a perspective view of an electro magnet suitable for use with the present invention, while Fig. 8B illustrates the electromagnet assembled to the pump;

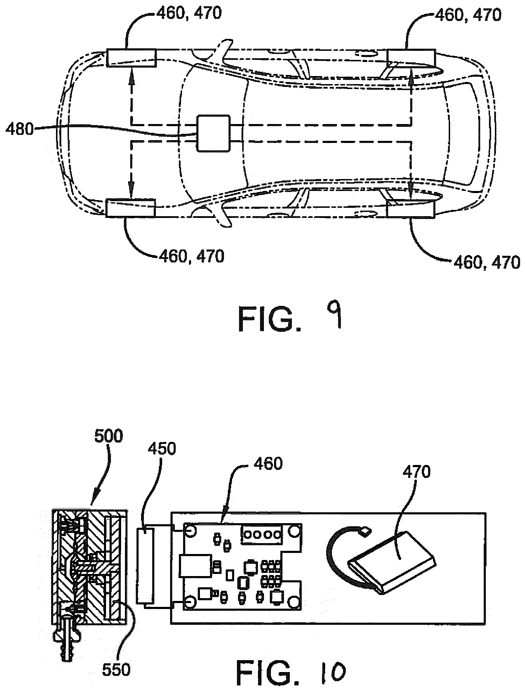

Fig. 9 is a schematic of an exemplary vehicle with tires having the pump of the present invention, and the location of the power receivers on the vehicle; and
Fig. 10 is a schematic of the pump, micro-control system and power management system.

### Detailed Description of Example Embodiments of the Present Invention

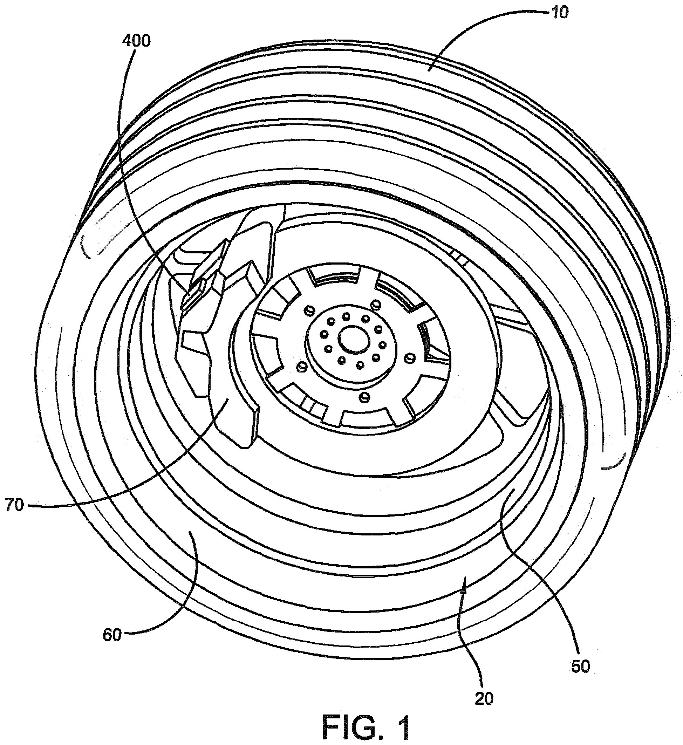

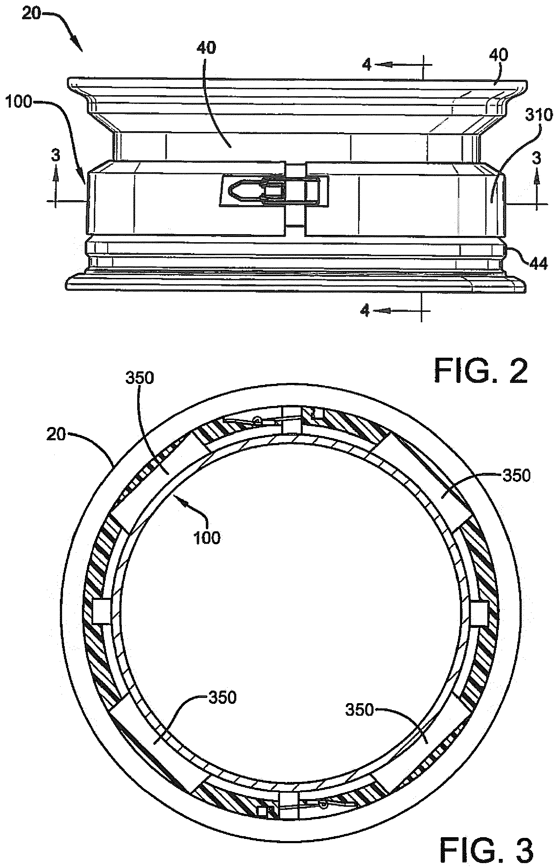

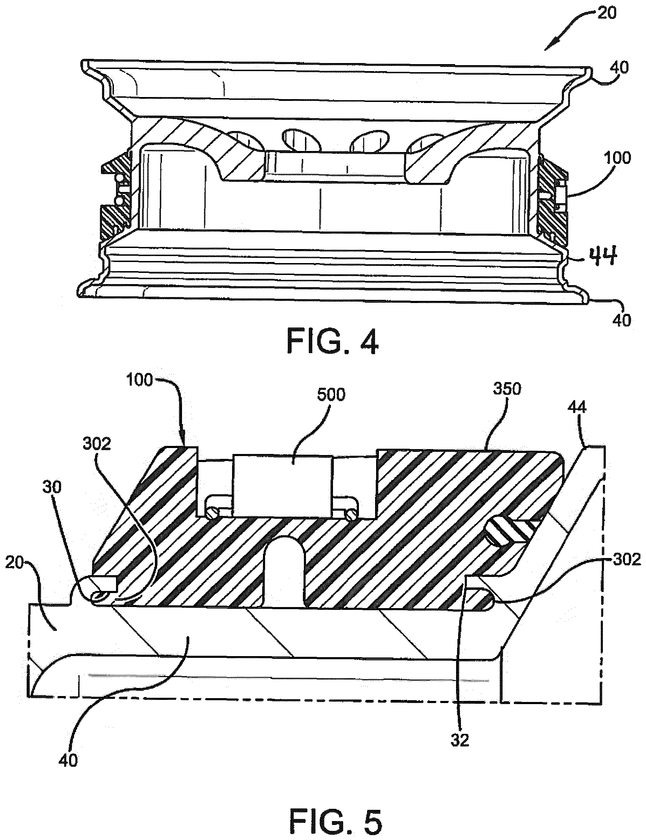

FIGS. 1 through 5 illustrate a wheel 20 which houses a low-profile pump system 100 of the present invention. A conventional tire 10 is mounted on the wheel and encloses the pump system in the tire cavity. As shown in Figure 2, the wheel 20 may be conventional. As shown in Figure 5, the wheel 20 is preferably modified to include opposed grooves 30, 32 located on the rim flange 40. The groove 30, 32 is preferably U shaped or any desired shape that could easily mount a pump system therein. A lower portion 302 of the low-profile pump system 100 is preferably received in the groove 30. The lower portion 302 of the pump system housing is designed to have a snap in fit in the groove 30. A snap in insert 50 conceals the pump system on the outer wheel surface 60. Preferably, the low-profile pump system 100 includes one or more low profile pumps 500, as shown in Figures 3 and 5. Each low-profile pump 500 is mounted in a housing 350. The outer surface 310 of the pump housing is preferably flush with the rim flange surface 44. The low-profile pump 500 is designed to have a minimal height H2 in the radial direction when the pump is mounted on the rim flange. The radial height H2 of the pump system is preferably minimized to less than or equal to the Tire and Rim Assembly or ETRTO defined standard tire rim well depth.

A low-profile pump preferable for use with the invention is a double acting diaphragm pump 500 as shown in Figures 7 through 8. The pump is preferably low profile having a minimized height H2 in the radial direction. The pump 500 has an inlet port 572 and an outlet port 574 as shown in Fig 7B. The pump has a lower frame 510 that includes an inner chamber 511 for reciprocation of a strike plate 550 as shown in Fig. 7E. The strike plate 550 is housed in the inner chamber 511 and is connected to reciprocating guide rods 560 that slide in bearing sleeves 730. A resilient spring is positioned between the upper end 561 of the guide rod and the upper support frame 520 for biasing the strike plate radially outward of the diaphragm 600. The diaphragm pump 500 has two chambers, a first or radially outer chamber 620 and a second or radially inner chamber 630. The two chambers are preferably in fluid communication with each other, so that the outlet air from the first chamber is fed into the inlet of the second chamber. The diaphragm 600 is affixed to a holder by a screw and is positioned for reciprocation in each chamber 620, 630. The holder is affixed to the strike plate 550, so that the diaphragm reciprocates in the chambers 620, 630 by actuation of the strike plate 550. A gasket and bearing collar is received about the support holder.

The pathway of the air is shown in Figures 7D and 7E. As shown in Figure 7E, air enters the pump via inlet 572 and is fed into a first passageway 514 through a one-way check valve 710. The first passageway is in fluid communication with the radially outer or first chamber 620. The compressed air exits through a second check valve 700 and then into lower passageway 516 that feeds the second chamber 630. The lower passageway 516 is formed between a middle housing 520 and lower housing or frame 510. The compressed air then exits the check valve 720 into valve outlet 574.

The driving force of the pump 500 may be a permanent magnet 400 that is placed on a fixed or stationary position near the wheel (i.e., does not rotate with the wheel), such as the brake system or suspension system as shown in Figure 1. As shown in Figures 2-3, the pump housing 350 is snap fit into opposed grooves 30 of a rim flange, so that the strike plate 550 is in electrical communication with the permanent magnet 400. Preferably, the strike plate 550 faces the permanent magnet 400. Multiple permanent magnets 400 may be used at spaced apart intervals.

The driving force of the pump may also be from an electrically energized magnet or electromagnet 450 capable of being switched on and off as shown in Figure 8a. If an electric magnet 450 is used, then the pumping action is controlled by the energized action (on/off) of the electric magnet. The electric magnet 450 is preferably positioned adjacent the strike plate 550 as shown in Fig. 8B. The electromagnet has the advantage of providing fluid control of the system since it may be switched on and off. Figure 10 illustrates the pump 500 and electromagnet 450, and how the electrical connection of each electromagnet 450 is achieved. Each electromagnet 450 on a given wheel is connected to a microcontroller 460, wherein each microcontroller 460 has a built-in charging receiver and may include an optional Tire Pressure Monitoring System or TPMS unit. Each microcontroller 460 is mounted on the rim, inside the tire. The TPMS unit is configured from several components including pressure, temperature sensors to measure and communicate the tire pressure and tire temperature data. Each microcontroller receives power from a power receiver 470, which is also mounted on the rim inside the tire. The power receiver 470 includes a wireless charging receiver, a rechargeable battery or a supercapacitor. Each power receiver 470 is in electrical communication with a wireless power charging transmitter 480, that is preferably mounted on a vehicle.

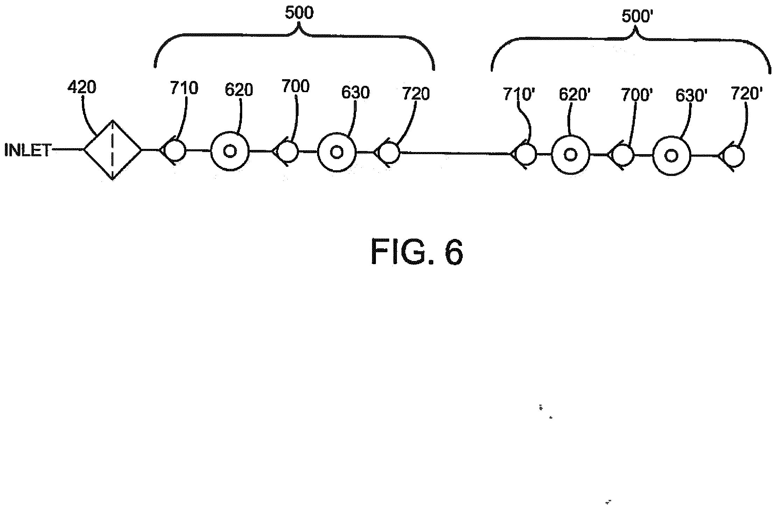

Figure 6 illustrates the pump system 100 with two or more double acting diaphragm pumps 500, 500' wherein the pump chambers 620, 630, 620', 630' are arranged in series, so that the outlet of a first pump chamber 620 is fed into the inlet of the second pump chamber 630. Multiple pumps may additionally be used and also connected in series. Preferably, a check valve 710, 700, 720, 710', 700', 720' is located between each of the pump chamber connections to prevent backflow. Due to an amplification effect of connecting the pump passageways in series, the compression of the pump driving mechanism may be defined as:

R=(r)²ⁿ

*where*
*R*: system compression ratio
*r*: single chamber compression ratio
*n:* number of pump in the system

Thus, a high compression ratio for each pump 500 is not necessary to achieve an overall high compression ratio of the pump system (e.g., low force and/or deformation may produce high compression). The pump system may also optionally include a filter 420. The air inlet to the pump system maybe from a passageway in the valve stem, as described in US-A-2018/0319228 and US-A-2018/0086160, or from a passageway in the rim. Air enters the tire cavity from the outlet of the last pump.

In an alternate embodiment, any of the one or more pumps may be arranged in a groove on the wheel outside of the tire.

In an alternate embodiment, the driving force may be from the rotational energy of the wheel imparting energy to the strike plate or plunger plate. The mass of the strike plate or plunder sized to actuate as the wheel rotates. No magnet is needed.

The low-profile pump system as described herein have the advantage of a simple, low cost system that is easy to install on a wheel and solves the problem of low tire pressure. The system is light, durable and provides a high driving force. The system may be used on consumer and commercial truck systems.

## Claims

1. A pump mechanism for mounting on a wheel (20) for inflating a pneumatic tire (10), the pump mechanism (500) comprising a housing (350) having a first pump chamber (630) and a second pump chamber (620), wherein a diaphragm (600) separates the first pump chamber from the second pump chamber, the housing (350) further including an inlet port (572) in fluid communication with the first pump chamber (630), and an outlet port (574) in fluid communication with the second pump chamber (620), wherein the outlet of the first pump chamber (630) is in fluid communication with the inlet of the second pump chamber (620); and a strike plate (550) positioned for reciprocation in the housing (350), the strike plate (550) being connected to a diaphragm holder, wherein the diaphragm holder engages the diaphragm (600) and is configured to actuate the diaphragm in the first and second pump chamber **characterized in that** the pump mechanism (500) further comprises a second pump mechanism (500'), wherein the outlet of the first pump mechanism (500) is connected in series to the inlet of the second pump mechanism (500'), wherein the pump mechanism (500) and/or the second pump mechanism (550') is mounted into a housing (350) that snap fits into a groove (30, 32) of the rim.

2. The pump mechanism of claim 1 wherein the strike plate (550) is actuated by a permanent magnet (400) or by an electromagnet (450).

3. The pump mechanism of at least one of the previous claims wherein the strike plate (550) is connected to a reciprocating guide rail, and, optionally, wherein a spring is positioned between a first end of the reciprocating guide rail and the housing (350) for biasing the strike plate (550) in a direction away from the housing (350).

4. The pump mechanism of at least one of the previous claims wherein the pump mechanism (500) has a height of less than 20 mm and/or wherein the pump mechanism (500) is configured for mounting inside the wheel rim on the rim flange (40).

5. The pump mechanism of at least one of the previous claims wherein the permanent magnet (400) is mounted on a brake caliper (70).

6. The pump mechanism of claim 1 wherein a check valve (720, 710') is positioned between the first pump mechanism (500) and the second pump mechanism (500').

7. The pump mechanism of at least one of the previous claims wherein a check valve (710, 710') is positioned between the pump inlet and the first pump cavity and/or wherein a check valve (700, 700') is positioned between the first pump cavity and the second pump cavity.

8. The pump mechanism of at least one of the previous claims wherein a check valve (720') is positioned between the second pump cavity and the pump outlet.

9. The pump mechanism of at least one of the previous claims wherein a control valve is disposed at an air inlet to the pump mechanism and/or wherein a control valve is disposed at an air outlet of the pump mechanism.

10. A wheel assembly comprising a wheel and a pump mechanism in accordance with at least one of the previous claims mounted on the wheel (20), preferably inside the wheel rim on the rim flange (40), for inflating a pneumatic tire (10), and, optionally, a pneumatic tire (10) mounted to the wheel (20).

## Patentansprüche

1. Pumpmechanismus zum Montieren an einem Rad (20) zum Aufpumpen eines Luftreifens (10), wobei der Pumpmechanismus (500) ein Gehäuse (350), das eine erste Pumpenkammer (630) und eine zweite Pumpenkammer (620) aufweist, wobei eine Membran (600) die erste Pumpenkammer von der zweiten Pumpenkammer trennt, das Gehäuse (350) ferner eine Einlassöffnung (572), die mit der ersten Pumpenkammer (630) in Fluidverbindung steht, und eine Auslassöffnung (574) beinhaltet, die mit der zweiten Pumpenkammer (620) in Fluidverbindung steht, wobei der Auslass der ersten Pumpenkammer (630) mit dem Einlass der zweiten Pumpenkammer (620) in Fluidverbindung steht; und eine Schließplatte (550) umfasst, die für eine Hin- und Herbewegung in dem Gehäuse (350) positioniert ist, wobei die Schließplatte (550) mit einem Membranhalter verbunden ist, wobei der Membranhalter in die Membran (600) eingreift und konfiguriert ist, um die Membran in der ersten und der zweiten Pumpenkammer zu betätigen, **dadurch gekennzeichnet, dass** der Pumpmechanismus (500) ferner einen zweiten Pumpmechanismus (500') umfasst, wobei der Auslass des ersten Pumpmechanismus (500) mit dem Einlass des zweiten Pumpmechanismus (500') in Reihe geschaltet ist, wobei der Pumpmechanismus (500) und/oder der zweite Pumpmechanismus (550') in ein Gehäuse (350) montiert ist, das in eine Nut (30, 32) der Felge einschnappt.

2. Pumpmechanismus nach Anspruch 1, wobei die Schließplatte (550) durch einen Permanentmagneten (400) oder durch einen Elektromagneten (450) betätigt wird.

3. Pumpmechanismus nach wenigstens einem der vorhergehenden Ansprüche, wobei die Schließplatte (550) mit einer sich hin- und herbewegenden Führungsschiene verbunden ist und optional wobei eine Feder zwischen einem ersten Ende der sich hin- und herbewegenden Führungsschiene und dem Gehäuse (350) zum Vorspannen der Schließplatte (550) in einer Richtung weg von dem Gehäuse (350) positioniert ist.

4. Pumpmechanismus nach wenigstens einem der vorhergehenden Ansprüche, wobei der Pumpmechanismus (500) eine Höhe von weniger als 20 mm aufweist und/oder wobei der Pumpmechanismus (500) zum Montieren im Inneren der Radfelge an dem Felgenrand (40) konfiguriert ist.

5. Pumpmechanismus nach wenigstens einem der vorhergehenden Ansprüche, wobei der Permanentmagnet (400) an einem Bremssattel (70) montiert ist.

6. Pumpmechanismus nach Anspruch 1, wobei ein Rückschlagventil (720, 710') zwischen dem ersten Pumpmechanismus (500) und dem zweiten Pumpmechanismus (500') positioniert ist.

7. Pumpmechanismus nach wenigstens einem der vorhergehenden Ansprüche, wobei ein Rückschlagventil (710, 710') zwischen dem Pumpeneinlass und dem ersten Pumpenhohlraum positioniert ist und/oder wobei ein Rückschlagventil (700, 700') zwischen dem ersten Pumpenhohlraum und dem zweiten Pumpenhohlraum positioniert ist.

8. Pumpmechanismus nach wenigstens einem der vorhergehenden Ansprüche, wobei ein Rückschlagventil (720') zwischen dem zweiten Pumpenhohlraum und dem Pumpenauslass positioniert ist.

9. Pumpmechanismus nach wenigstens einem der vorhergehenden Ansprüche, wobei ein Steuerventil an einem Lufteinlass zu dem Pumpmechanismus angeordnet ist und/oder wobei ein Steuerventil an einem Luftauslass des Pumpmechanismus angeordnet ist.

10. Radanordnung, die ein Rad und einen Pumpmechanismus nach wenigstens einem der vorherigen Ansprüche umfasst, die an dem Rad (20), vorzugsweise im Inneren der Radfelge an dem Felgenrand (40) zum Aufpumpen eines Luftreifens (10) und optional eines Luftreifens (10), der an dem Rad (20) montiert ist, montiert ist.

## Revendications

1. Mécanisme de pompage pour son montage sur une roue (20), qui est destiné au gonflage d'un bandage pneumatique (10), le mécanisme de pompage (500) comprenant un boîtier (350) qui possède une première chambre de pompage (630) et une deuxième chambre de pompage (620) ; dans lequel un diaphragme (600) sépare la première chambre de pompage de la deuxième chambre de pompage, le boîtier (350) englobant en outre un orifice d'entrée (572) qui est mis en communication par fluide avec la première chambre de pompage (630) et un orifice de sortie (574) qui est mis en communication par fluide avec la deuxième chambre de pompage (620) ; dans lequel la sortie de la première chambre de pompage (630) est mise en communication par fluide avec l'entrée de la deuxième chambre de pompage (620) ; et une plaque de butée (550) qui est disposée pour pouvoir effectuer un mouvement de va-et-vient dans le boîtier (350), la plaque de butée (550) étant reliée à un dispositif de maintien de diaphragme ; dans lequel le dispositif de maintien de diaphragme entre en contact avec le diaphragme (600) et est configuré pour activer le diaphragme dans la première et dans la deuxième chambre de pompage, **caractérisé en ce que** le mécanisme de pompage (500) comprend en outre un deuxième mécanisme de pompage (500') ; dans lequel la sortie du premier mécanisme de pompage (500) est montée en série par rapport à l'entrée du deuxième mécanisme de pompage (500') ; dans lequel le mécanisme de pompage (500) et/ou le deuxième mécanisme de pompage (550') est/sont montés dans un boîtier (350) qui vient s'insérer par encliquetage dans une rainure (30, 32) de la jante.

2. Mécanisme de pompage selon la revendication 1, dans lequel la plaque de butée (550) est activée par un aimant permanent (400) ou par un électroaimant (450).

3. Mécanisme de pompage selon au moins une des revendications précédentes, dans lequel la plaque de butée (550) est reliée à un rail de guidage qui se déplace sous la forme d'un mouvement en va-et-vient ; et, de manière facultative, dans lequel un ressort est disposé entre une première extrémité du rail de guidage qui se déplace sous la forme d'un mouvement en va-et-vient et le boîtier (350) à des fins de mise en état de précontrainte de la plaque de butée (550) dans une direction qui s'écarte du boîtier (350).

4. Mécanisme de pompage selon au moins une des revendications précédentes, dans lequel le mécanisme de pompage (500) possède une hauteur qui est inférieure à 20 mm et/ou dans lequel le mécanisme de pompage (500) est configuré pour son montage à l'intérieur de la jante de la roue sur le rebord de jante (40).

5. Mécanisme de pompage selon au moins une des revendications précédentes, dans lequel l'aimant permanent (400) est monté sur une mâchoire de frein (70).

6. Mécanisme de pompage selon la revendication 1, dans lequel un clapet antiretour (720, 710') est disposé entre le premier mécanisme de pompage (500) et le deuxième mécanisme de pompage (500').

7. Mécanisme de pompage selon au moins une des revendications précédentes, dans lequel un clapet antiretour (710, 710') est disposé entre l'entrée de la pompe et la cavité de la première pompe et/ou dans lequel un clapet antiretour (700, 700') est disposé entre la cavité de la première pompe et la cavité de la deuxième pompe.

8. Mécanisme de pompage selon au moins une des revendications précédentes, dans lequel un clapet antiretour (720') est disposé entre la cavité de la deuxième pompe et la sortie de la pompe.

9. Mécanisme de pompage selon au moins une des revendications précédentes, dans lequel une soupape de réglage est disposée à une entrée pour l'air dans la direction du mécanisme de pompage et/ou dans lequel une soupape de réglage est disposée à une sortie pour l'air du mécanisme de pompage.

10. Assemblage de roue qui comprend une roue et un mécanisme de pompage selon au moins une des revendications précédentes, qui est monté sur la roue (20), de préférence à l'intérieur de la jante de la roue sur le rebord de jante (40), à des fins de gonflage d'un bandage pneumatique (10); et, de manière facultative, un bandage pneumatique (10) monté sur la roue (20).
